# EUROPEAN PATENT SPECIFICATION

(11) **EP 2 608 293 B1**
(45) Date of publication and mention of the grant of the patent: **19.11.2014**
(21) Application number: 12198147.6
(22) Date of filing: 19.12.2012
(51) Int. Cl.: H01M 2/34, H01M 2/02, H01M 2/22

(54) **Rechargeable battery**
Wiederaufladbare Batterie
Batterie rechargeable

(30) Priority: 23.12.2011 US 201161579787 P; 11.05.2012 US 201213469186
(43) Date of publication of application: 26.06.2013
(73) Proprietor: Samsung SDI Co., Ltd., Yongin-si, Gyeonggi-do (KR); ROBERT BOSCH GMBH, 70442 Stuttgart (DE)
(72) Inventor: Kim, In, Yongin-si, Gyeonggi-do (KR); Kim, Duk-Jung, Yongin-si, Gyeonggi-do (KR); Kim, Joong-Heon, Yongin-si, Gyeonggi-do (KR)
(74) Representative: Gulde & Partner

(56) References cited:
- EP-A1- 2 330 661
- EP-A1- 2 410 594
- US-A1- 2010 279 170

## Description

### FIELD OF THE INVENTION

The present invention relates to a rechargeable battery. More particularly, the present invention relates to a rechargeable battery with an improved safety apparatus structure.

### DESCRIPTION OF THE RELATED ART

A rechargeable battery is capable of being charged and discharged, while a primary battery may not be recharged. Low-capacity rechargeable batteries are used for portable compact electronic apparatuses such as mobile phones or notebook computers and camcorders, and high-capacity rechargeable batteries are widely used as a power source for driving a motor of a hybrid vehicle, etc. or for high-capacity storage devices.

Recently, a high-output rechargeable battery using a non-aqueous electrolyte having high energy density has been developed. The high-output rechargeable battery is configured with a high-capacity battery module by connecting a plurality of rechargeable batteries in series so as to be used for driving a motor for an apparatus requiring a large amount of power, i.e., an electrical vehicle, etc. The rechargeable battery may have a cylindrical shape, an angular shape, and the like.

When a conductive foreign material such as a nail or another sharp object penetrates into the rechargeable battery from the outside of the rechargeable battery, a short-circuit may occur inside the rechargeable battery. When the short-circuit occurs, the internal temperature of the rechargeable battery rapidly increases to cause a risk that the rechargeable battery may combust or explode.

Particularly, when a plurality of electrode assemblies are inserted inside one case, when the current charged to each electrode assembly is not discharged, a dangerous state is maintained such that the short-circuit may occur by the conductive foreign material penetrated from the outside.

The above information disclosed in this Background section is only for enhancement of understanding of the background of the invention and therefore it may contain information that does not form the prior art that is already known in this country to a person of ordinary skill in the art. The prior art is represented by US 2010/0279170.

### SUMMARY OF THE INVENTION

Accordingly, the present invention provides a rechargeable battery with improved safety. The invention is defined in claim 1.

A rechargeable battery according to the invention comprises a plurality of electrode assemblies stacked along a width direction, each having a first electrode, a second electrode having a different polarity than the first electrode and a separator interposed between the first and the second electrodes, and a case for mounting the plurality of electrode assemblies therein. A first safety member is further provided between two neighboring electrode assemblies of the plurality of electrode assemblies, the first safety member being electrically connected to at least one of the two first electrodes of the two neighboring electrode assemblies.

Preferably, the outermost electrode layer of an electrode assembly is formed by the first electrode.

The first safety member preferably comprises a first connection portion electrically connected to a first electrode of one of the two neighboring electrode assemblies. Additionally or alternatively a second connection portion is provided being is electrically connected to the first electrode of the other of the two neighboring electrode assemblies. The first safety member extends in a plane perpendicular to the width direction.

The first and second connecting portions may extend from the same side surface of the first safety member along a length direction perpendicular to the width direction.

In one embodiment, the first and second connection portions are connected to each other in the height direction of the first safety member and preferably extend along the entire height of the first safety member.

In another embodiment the first and second connection portions are integrally formed with each other, connected by a connection plate, the first and second connection portions and the connection plate being bent with respect to each other, preferably forming a zigzag- or meander-like or s-like structure.

In a further embodiment, the first and second connecting portions are separated along the height direction of the first safety member.

Preferably, the first connection portion is bent toward one first electrode of the two neighboring electrode assemblies and the second connection portion is bent toward the other first electrode of the two neighboring electrode assemblies.

The first safety member further comprises a side plate extending in a plane perpendicular to the width direction.

The first and second connection portions may each comprise an inclination portion bent toward a respective first electrode and a welding portion bent from the inclination portion and being parallel to the side plate, the welding portion being welded to the respective first electrode.

The side plate may be covered with an insulating film formed on both surfaces of the side plate facing the neighboring electrode assemblies.

The first safety member is a metal plate, preferably made of a same metal as the first electrodes.

A second safety member may further be installed between the case and an outer surface of the plurality of electrode assemblies facing an inner surface of the case, preferably wherein the second safety member comprises a side plate and a connection portion being electrically connected to the first electrode of the respective outer electrode assembly. A third safety member may be installed between the case and the opposite outer surface of the plurality of electrode assemblies facing the opposite inner surface of the case, wherein preferably the third safety member comprise a side plate and a connection portion being electrically connected to the first electrode of the respective outer electrode assembly.

The two neighboring first electrodes each comprise a first uncoated region not coated with an active material and corresponding two neighboring second electrodes each comprise a second uncoated region not coated with an active material, the first safety member being electrically connected to two neighboring first electrode uncoated regions.

According to an exemplary embodiment of the present invention, when the conductor foreign material penetrates from the outside, the combustion and the explosion due to the short-circuit are prevented, thereby improving the safety of the rechargeable battery.

### BRIEF DESCRIPTION OF THE DRAWINGS

FIG. 1 is a perspective view of a rechargeable battery according to the first exemplary embodiment of the present invention.
FIG. 2 is a cross-sectional view taken along the line II-II of FIG. 1.
FIG. 3 is an exploded perspective view of an electrode assembly and a safety member according to the first exemplary embodiment of the present invention.
FIG. 4 is a perspective view of the first safety member.
FIG. 5 is a horizontal cross-sectional view of a rechargeable battery according to the first exemplary embodiment of the present invention.
FIG. 6 is a perspective view of the first safety member of a rechargeable battery according to the second exemplary embodiment of the present invention.
FIG. 7 is a perspective view of the first safety member of a rechargeable battery according to the third exemplary embodiment of the present invention.
FIG. 8 is a perspective view of a safety member of a rechargeable battery according to the fourth exemplary embodiment of the present invention.
FIG. 9 is a cross-sectional view of a rechargeable battery according to the fourth exemplary embodiment of the present invention.

### DETAILED DESCRIPTION OF THE EMBODIMENTS

The present invention will be described more fully hereinafter with reference to the accompanying drawings, in which exemplary embodiments of the invention are shown. As those skilled in the art would realize, the described embodiments may be modified in various different ways, all without departing from scope of the present invention. Like reference numerals designate like elements throughout the specification.

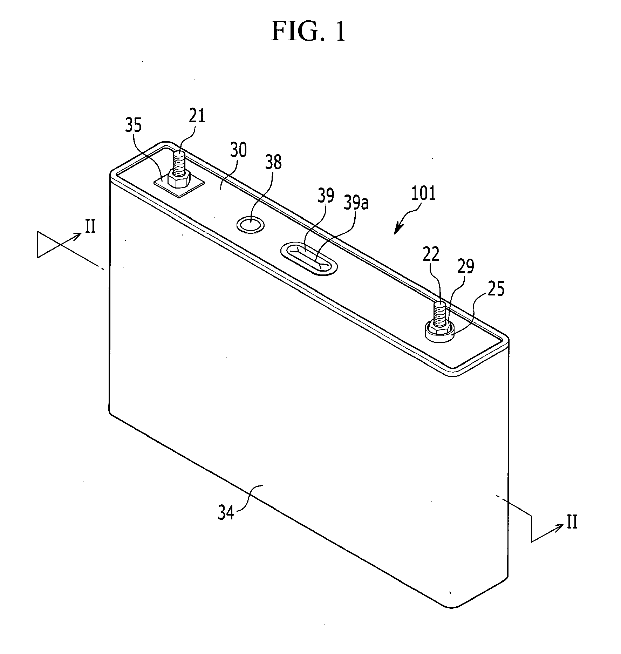

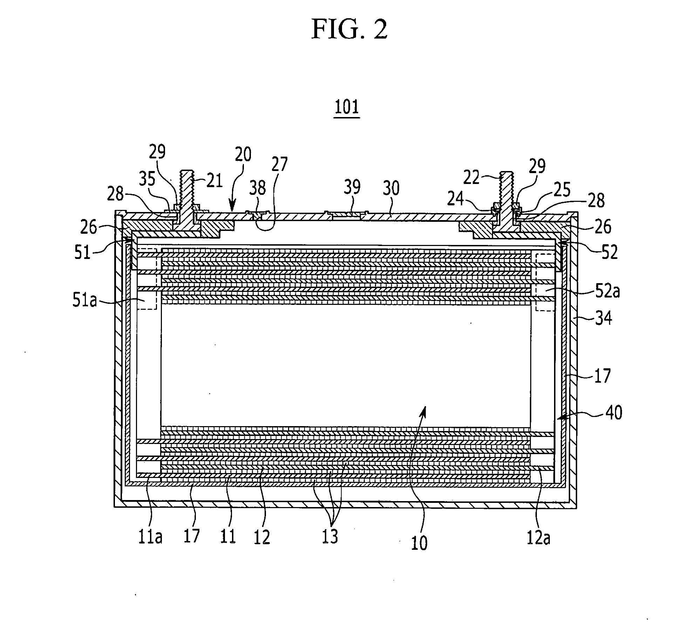

FIG. 1 is a perspective view of a rechargeable battery according to the first exemplary embodiment of the present invention and FIG. 2 is a cross-sectional view taken along the line II-II of FIG. 1.

Referring to FIG. 1 and FIG. 2, a rechargeable battery 101 according to the first exemplary embodiment includes a plurality of electrode assemblies 10 formed by winding a positive electrode 11 and a negative electrode 12 while interposing a separator 13 therebetween, a case 34 in which the electrode assemblies 10 are installed, and a cap assembly 20 coupled to an opening of the case 34.

The rechargeable battery 101 according to the first exemplary embodiment is exemplarily formed in a square shape. However, the present invention is not limited thereto. That is, various types of batteries including a lithium polymer battery or a cylindrical battery may be used.

The positive electrode 11 includes a positive coating region where an active material is coated to a current collector formed of a thin metal foil made of aluminum etc, and a positive uncoated region 11 a where the active material is not coated. The negative electrode 12 includes a negative coating region where the active material is coated to a current collector formed of a thin metal foil made of copper etc., and a negative uncoated region 12a where the active material is not coated.

Here, the positive electrode 11 becomes the second electrode connected to the case 34, and the negative electrode 12 becomes the first electrode connected to safety members 41, 42, and 43. However, the present invention is not limited thereto, and the positive electrode 11 may be the first electrode, and the negative electrode 12 may be the second electrode.

In the present exemplary embodiment, four electrode assemblies 10 are installed inside the case 34, however the present invention is not limited thereto, and a plurality of electrode assemblies may be installed inside the case.

The positive uncoated region 11 a is formed at one side end of the positive electrode 11 according to the length direction of the positive electrode 11, and the negative uncoated region 12a is formed at the other side end of the negative electrode 12 according to the length direction of the negative electrode 12. After the insulating separator 13 is interposed between the positive and negative electrodes 11 and 12, the electrodes 11 and 12 and the separator 13 are spirally wound. Moreover, a finishing tape (not shown) supporting the shape of the electrode assembly 10 may be attached to an outer surface of the electrode assembly 10.

However, the present invention is not limited thereto, and the electrode assembly 10 may have a structure in which the positive electrode and the negative electrode that are formed by a plurality of sheets are alternately laminated with the separator interposed therebetween.

The case 34 is formed by a substantially rectangular parallelepiped and has an opening that is opened on one surface thereof. An insulating encapsulation 17 for insulation is installed between the case 34 and the electrode assemblies 10. The insulating encapsulation 17 has a film shape, and the top of the insulating encapsulation 17 is opened.

The cap assembly 20 includes a cap plate 30 covering the opening of the case 34, a positive terminal 21 that protrudes outwardly from the cap plate 30 and is electrically connected with the positive electrode 11, and a negative terminal 22 that protrudes outwardly from the cap plate and is electrically connected with the negative electrode, and a vent member 39 with a notch 39a so as to fracture depending on a set internal pressure.

The cap plate 30 is formed by a thin sheet, and an electrolyte injection hole 27 for injecting an electrolyte us formed at one side and a sealing plug 38 is installed at the electrolyte injection hole 27.

A lower gasket 28 is installed between the cap plate 30 and the terminals 21 and 22 to seal the space between the cap plate 30 and the terminals 21 and 22. In this disclosure, the terminals 21 and 22 include the positive terminal 21 and the negative terminal 22.

The lower gasket 28 fits in a terminal hole and is closely disposed on the bottom of the cap plate 30. The terminals 21 and 22 have a cylindrical shape. Nuts 29 supporting the terminals 21 and 22 on the top are installed at the terminals 21 and 22, and threads are formed on the outer peripheries of the terminals so that the nuts 29 are fastened to the outer peripheries of the terminals 21 and 22.

A connection plate 35 is inserted into the positive terminals 21. Therefore, the connection plate 35 is installed between the nut 29 and the cap plate 30. The connection plate 35 serves to electrically connect the positive terminal 21 with the cap plate 30. As a result, the cap plate 30 and the case 34 are electrically connected with the positive electrode 11.

An upper gasket 25 is installed into the negative terminal 22. Therefore, the upper gasket 25 is disposed on the lower gasket 28 to contact the top of the cap plate 30. The upper gasket 25 serves to insulate the negative terminal 22 and the cap plate 30 from each other. A washer 24 buffering the fastening force between the nut 29 and the upper gasket 25 is installed on the upper gasket 25.

A lower insulation member 26 for insulation is installed between the terminals 21 and 22, and the cap plate 30 is installed under the lower insulation member 26.

A current collecting member 51 electrically connected with the positive electrode 11 is attached to the positive terminal 21 by welding, and the positive terminal 21 and the current collecting member 51 fit in a groove that is formed on the bottom of the lower insulation member 26. The current collecting member 51 is equipped with a plurality of tabs 51 a that protrude downward. Therefore, the plurality of tabs 51 a are attached to the positive uncoated region 11 a by welding.

A current collecting member 52 electrically connected with the negative electrode 12 is attached to the negative terminal 22 by welding, and the negative terminal 22 and the current collecting member 52 fit in a groove that is formed on the bottom of the lower insulation member 26. The current collecting member 52 is equipped with a plurality of tabs 52a that protrude downward. Thee plurality of tabs 52a are attached to the negative uncoated region 12a by welding.

Safety members electrically connected to the negative electrode 12 are installed between the electrode assemblies 10 and at the outer surface of the electrode assemblies 10 disposed outside.

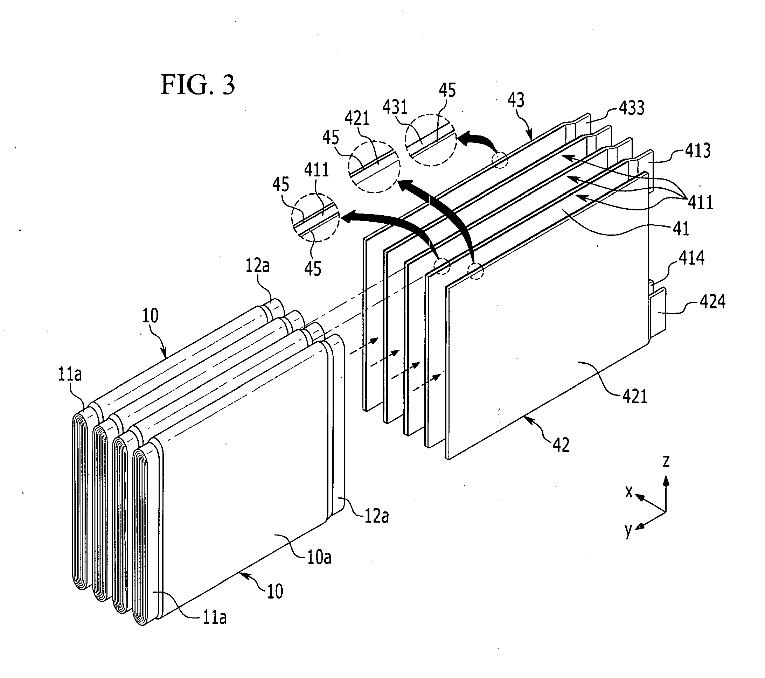

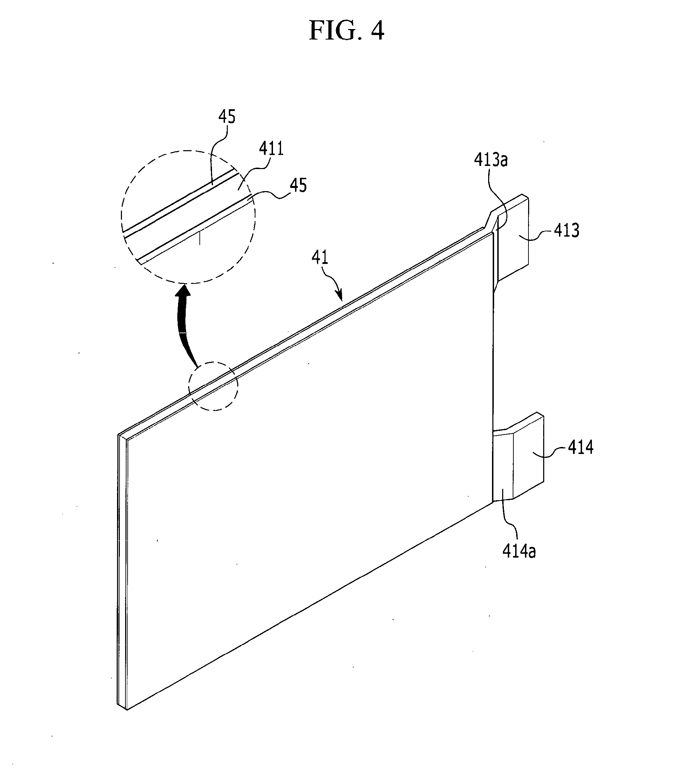

FIG. 3 is an exploded perspective view of an electrode assembly and a safety member according to the first exemplary embodiment of the present invention, and FIG. 4 is a perspective view of the first safety member. Fig. 3 includes a coordinate system. In Fig. 3, the plurality of electrode assemblies 10 are stacked along the X-direction as the width direction of the battery 101. Each electrode assembly 10 has two flat surfaces 10a extending in the YZ-plane.

Referring to FIG. 3 and FIG. 4, the safety members includes the at least one first safety member 41 disposed between the electrode assemblies 10, the second safety member 42 disposed at one side end of the electrode assemblies 10, and the third safety member 43 disposed at the other side end of the electrode assemblies 10.

However, the present invention is not limited thereto, the safety member may not disclose the second safety member 82 and the third safety member 83.

The electrode assemblies 10 are stacked along a width direction of the battery 101, in Fig. 3 the X-direction. The safety members 41, 42, 43 according to the invention extend in a plane perpendicular to the width direction X, in Fig. 3 the YZ-plane, i.e. parallel to the flat surfaces 10a of the electrode assemblies 10. Preferably, the safety members 41, 42, 43 cover at least the coated regions of the electrode assemblies 10.

According to the present exemplary embodiment, each of the three first safety members 41 may be disposed between the two neighboring electrode assemblies of the four electrode assemblies 10 such that it is installed for both surfaces thereof to contact the neighboring electrode assemblies.

However, the present invention is not limited thereto, the only one first safety member 41 may be disposed between the two neighboring electrode assemblies of the four electrode assemblies 10.

Furthermore, any first safety member 41 according to the invention and not limited to a specific embodiment may be electrically connected to just one electrode assembly 10.

The first safety member 41 includes a side plate 411 attached to the flat surface 10a widely formed in the electrode assembly 10, and at least one of the first connection portion 413 and the second connection portion 414 connected and formed at the side plate 411 to be attached to the negative uncoated region 12a. The side plate 411 extends in a YZ-plane perpendicular to the stacking direction X of the electrode assemblies 10. Also the first and second connection portions extend in the YZ-plane. They extend from the side plate 411 in a length direction Y. The height direction of the first safety member in Fig. 3 is the Z-direction.

The side plate 411, and the first connection portion 413 and the second connection portion 414, may be made of a metal plate having conductivity such as copper or stainless steel. The side plate 411, the first connection portion 413, and the second connection portion 414 according to the present exemplary embodiment may be integrally formed. The first connection portion 413 may be formed on one side end of the side plate 411 and the second connection portion 414 may be formed under one side end of the side plate 411. In other words, the first connection portion 413 may be formed on the upper side end of the side plate 411 and the second connection portion 414 may be formed on the lower side end of the side plate 411, with a vertical gap in the Z-direction.

The first connection portion 413 may be bent toward the negative uncoated region 12a of one electrode assembly 10 among the neighboring electrode assemblies 10, i.e. bent in the x-direction, and the second connection portion 414 may be bent toward the uncoated region of the other electrode assembly 10 among the neighboring electrode assemblies 10, i.e. also bent in the x-direction, but with an opposing sign. Accordingly, the first connection portion 413 and the second connection portion 414 separately disposed in the height direction (Z-direction) of the side plate 411 may be protruded in different directions with respect to a thickness direction (X-direction) of the side plate 411.

The first connection portion 413 has an inclination portion obliquely bent toward one negative uncoated region 12a from the side plate 411 and a welding portion bent from the inclination portion and parallel to the side plate. The second connection portion 414 has an inclination portion obliquely bent toward the other negative uncoated region 12a from the side plate 411 and a welding portion bent from the inclination portion and parallel to the side plate.

The first connection portion 413 and the second connection portion 414 may be welded to the neighboring negative uncoated regions 12a to be electrically connected to the negative uncoated region 12a. Accordingly, the first safety member 41 may be electrically connected to the negative electrodes 12 of two electrode assemblies 10 disposed at both sides.

However, the present invention is not limited thereto, one of the first connection portion 413 and the second connection portion 414 may be welded to the negative uncoated portion 12a and electrically connected to the negative electrode 12 of the electrode assembly.

In the side plate 411, the insulating film 45 may be attached and installed to both surfaces contacting the electrode assembly 10. The insulation film 45 is made of a polymer and serves to prevent the positive electrode 11 of the electrode assembly 10 and the first safety member 41 from being electrically connected with each other.

The second safety member 42 may be installed to contact the outer surface of the electrode assemblies 10 disposed at one side end among the electrode assemblies 10. The second safety member 42 extends in the YZ-plane and may include a side plate 421 extending in the YZ-plane attached to the flat surface 10a toward the outside of the electrode assembly 10, i.e. in Fig. 3 toward the negative X-direction, and a connection portion 424 formed and connected to the side plate 421 and attached to the negative uncoated region 12a.

In this discloser, the flat surface 10a means a plane surface except for a bent portion of an upper end and a lower end among the outer surface of the electrode assembly 10.

The side plate 421 and the connection portion 424 may be made of the metal plate having conductivity such as copper and stainless steel. The side plate 421 and the connection portion 424 according to the present exemplary embodiment may be integrally formed, and the connection portion 424 may be formed under one side end of the side plate 421.

The connection portion 424 may be bent in the X-direction and formed toward the negative uncoated region 12a of the neighboring electrode assemblies. The connection portion 424 includes the inclination portion obliquely bent in the X-direction from the side plate 421 and the welding portion bent from the inclination portion and formed parallel to the side plate. The welding portion is preferably parallel to the side plate 421. The connection portion 424 is welded to the negative uncoated region 12a to be electrically connected with the negative uncoated region 12a, and supports the negative uncoated region 12a to prevent the negative uncoated region 12a from wobbling by external shock or vibration.

The insulating film 45 is attached to a surface contacted with the electrode assembly 10 in the side plate 421. The insulation film 45 is made of a polymer and serves to prevent the positive electrode of the electrode assembly 10 and the second safety member 42 from being electrically connected with each other. The insulation film 45 extends in YZ-plane.

The third safety member 43 may be installed to contact the outer surface of the electrode assemblies 10 disposed at the other side end among the electrode assemblies 10, in Fig. 3 in the positive X-direction. The third safety member 43 extends in a YZ-plane and may include the side plate 431 extending in a YZ-plane attached to the flat surface 10a toward the outside of the electrode assembly 10 and the connection portion 433 formed and connected to the side plate 431 and attached to the negative uncoated region 12a.

The side plate 431 and the connection portion 433 may be made of the metal plate having conductivity such as copper or stainless steel. The side plate 431 and the connection portion 433 according to the present exemplary embodiment may be integrally formed, and the connection portion 433 may be formed on one side end of the side plate 431.

The connection portion 414 may be bent in the X-direction toward the negative uncoated region 12a of the neighboring electrode assembly 10. The connection portion 414 has the inclination portion bent obliquely in the X-direction from the side plate 431 and a portion bent from the inclination portion and formed parallel to the side plate 431. The connection portion is welded to the negative uncoated region 12a to be electrically connected to the negative uncoated region 12a. The connection portion 433 of the third safety member 43 is obliquely formed in the direction opposite to the connection portion 424 of the second safety member 42.

The insulating film 45 is attached to a surface contacted with the electrode assembly 10 in the side plate 431. The insulation film 45 is made of a polymer and serves to prevent the positive electrode of the electrode assembly 10 and the third safety member 43 from being electrically connected with each other. The insulation film extends in a YZ-plane.

The current collecting member 52 is welded to the negative uncoated region 12a at the portion where the connection portions are not formed. However, the present invention is not limited thereto, and the tap 52a may be welded to the connection portion.

In addition, according to the present invention, the second safety member 42 and the third safety member 43 may not be installed to contact the outer surface of the electrode assemblies 10 disposed at the other side end among the electrode assemblies 10.

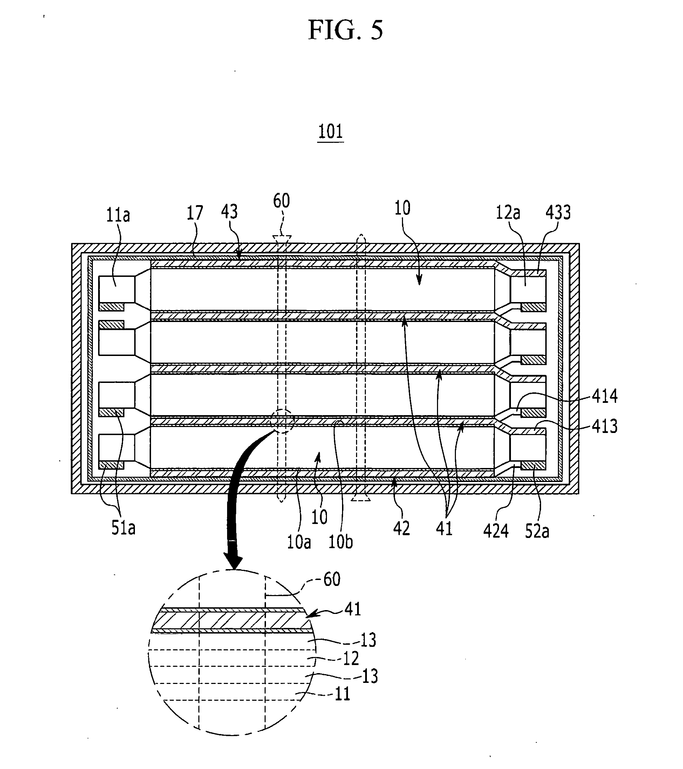

As shown in FIG. 5, when a conductive foreign material 60 such as a nail penetrates from the outside of the rechargeable battery 100 due to shock or accidents, and as a result, the positive electrode and the negative electrode short-circuit each other through the conductive foreign material 60, excessive heat is generated in the rechargeable battery 100, which may explode or combust. However, as described in the exemplary embodiment, when the safety member is installed, the first side plate 41 or the second side plate 42 and the case 34 short circuit each other, so it is possible to safely discharge the charged current. The first side plate 41 and the second side plate 42 are thicker than the electrode layers and have an improved capability to transfer heat.

According to the present invention, after the positive and negative electrodes 11 and 12 and the separator 13 are spirally wound, the negative electrode 12 may be disposed on the outermost surface of the electrode assemblies 10. In other words, the outermost electrode layer is formed by the negative electrode 12.

Accordingly, according to the present invention, each of the first safety member 41 and the negative electrode 12 may be disposed on the both sides of the separator 13 to face each other.

That is, after penetrating the first safety member 41 and the negative electrode 12 in sequence, the conductive foreign material 60 may penetrate the positive electrode 11.

The conductive foreign material 60 may absorb the heat occurred between the conductive foreign material 60 and the negative electrode 12, and a inside temperature of the electrode assembly 10 may be suppressed.

Here, the first safety member 41 may be formed of copper.

As such, according to the exemplary embodiment, when foreign materials 60 penetrate to cause a short-circuit, current may be discharged to remove a combustion risk, and the heat may be absorbed by the safety members, thereby improving the safety of the rechargeable battery 10.

Also, when the foreign material 60 penetrates from either side of the rechargeable battery 101, the current charged to the electrode assembly 10 may be rapidly discharged even though the foreign material 60 penetrates the sides of the battery 101 in any direction.

In the present exemplary embodiment, if the electrode assemblies 10 in which the first safety member 41 is positioned at both sides are all electrically contacted, even though the foreign material 60 penetrates in any direction, the safety members are firstly contacted such that that the positive electrode 11 and the negative electrode 12 are prevented from being directly short-circuited by the foreign material 60, thereby improving the safety.

However, the present invention is not limited thereto, the first safety member 41 may be electrically connected to one of the neighboring electrode assemblies 10.

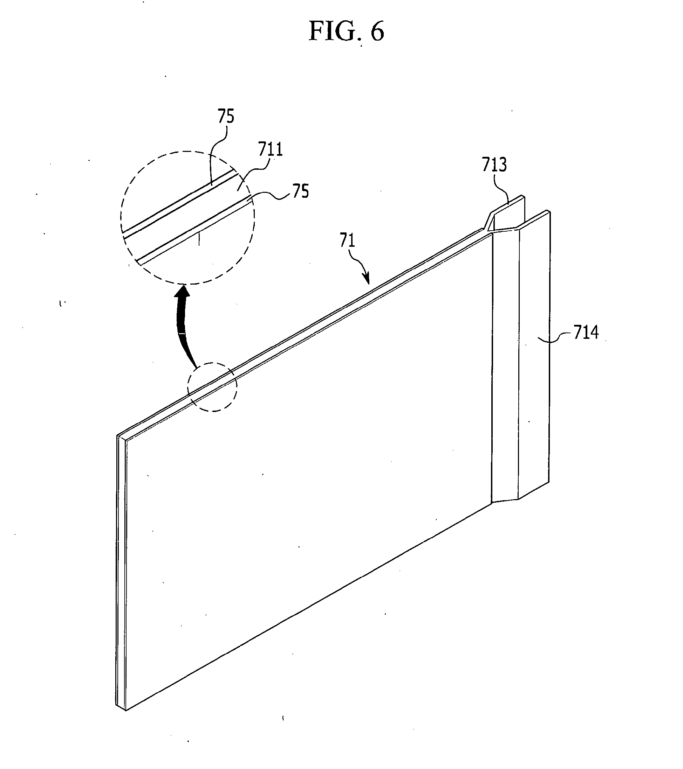

FIG. 6 is a perspective view of the first safety member of a rechargeable battery according to the second exemplary embodiment of the present invention.

The rechargeable battery according to the present exemplary embodiment is the same as the rechargeable battery according to the first exemplary embodiment except for the structure of the first safety member 71 such that the overlapping description of the same structure is omitted.

Referring to FIG. 6, the first safety member 71 according to the present exemplary embodiment may be disposed between the electrode assemblies 10 for both surfaces to contact the neighboring electrode assemblies 10. The first safety member 71 may include a side plate 711 attached to the flat surface 10a widely formed in the electrode assembly 10, and at least one of a first connection portion 713 and a second connection portion 714 connected and formed at the side plate 711 to be attached to the negative uncoated region 12a.

The side plate 711, and the first connection portion 713 and the second connection portion 714, are made of a metal plate having conductivity such as copper or stainless steel. The side plate 711, the first connection portion 713, and the second connection portion 714 according to the present exemplary embodiment may be integrally formed. However, the present invention is not limited thereto, and the second connection portion 714 may be attached to the side plate 711 or the first connection portion 713 though a welding method.

The first connection portion 713 and the second connection portion 714 may be formed at one side end of the side plate 711, and the first connection portion 713 and the second connection portion 714 may be connected in the height direction of the side plate 711. The second connection portion 714 and the second connection portion 714 are protruded from the side plate 711, and may be divided at the side end of the side plate 711. Accordingly, the first connection portion 713 and the second connection portion 714 may be easily connected to the side plate 711.

The first connection portion 713 may be bent toward the negative uncoated region 12a of one electrode assembly 10 among the neighboring electrode assemblies 10, and the second connection portion 714 may be bent toward the negative uncoated region 12a of the other electrode assembly 10 of the neighboring electrode assembly 10. Accordingly, the first connection portion 713 and the second connection portion 714 may be protruded in different directions with respect to the thickness direction of the side plate 711.

The first connection portion 713 includes the inclination portion obliquely bent toward one negative uncoated region 12a from the side plate 711 and the welding portion bent from the inclination portion and formed parallel to the side plate. The second connection portion 714 includes the inclination portion obliquely bent toward the other negative uncoated region 12a and the welding portion bent from the inclination portion and formed parallel to the side plate.

The inclination portion of the first connection portion 713 and the inclination portion of the second connection portion 714 are protruded in the side direction and the welding portion of the first connection portion 713 and the welding portion of the second connection portion 714 are disposed parallel to each other.

The first connection portion 713 and the second connection portion 714 are welded to the neighboring negative uncoated regions 12a to be electrically connected to the negative uncoated regions 12a, and thereby the side plate 711 may be electrically connected to the negative electrode 12 of two electrode assemblies 10 disposed at both sides.

However, the present invention is not limited thereto, one of the first connection portion 713 and the second connection portion 714 may be welded to the negative uncoated portion 12a and electrically connected to the negative electrode 12 of the electrode assembly.

In the side plate 711, the insulating film 75 may be attached and installed to both surfaces contacted with the electrode assembly 10. The insulation film 75 is made of a polymer and serves to prevent the positive electrode 11 of the electrode assembly 10 and the safety member 71 from being electrically connected with each other.

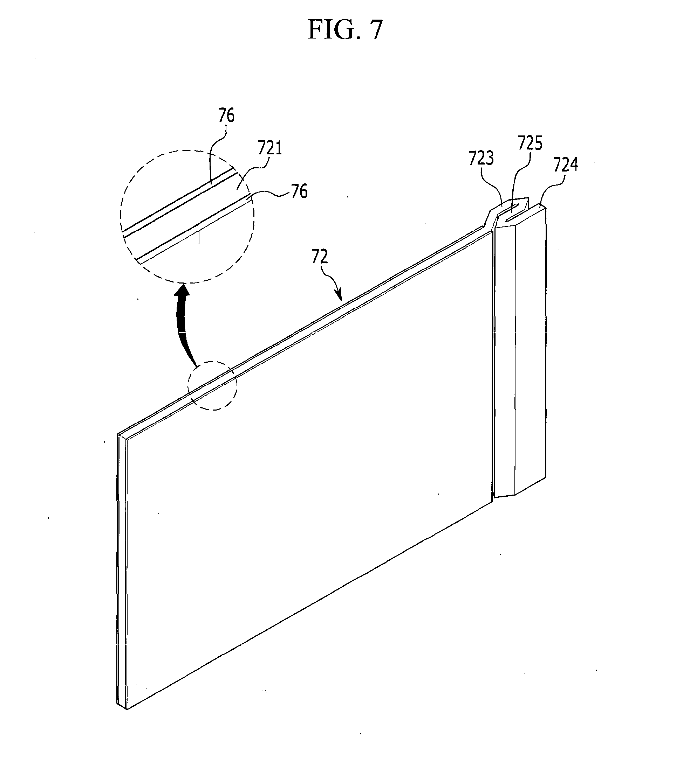

FIG. 7 is a perspective view of the first safety member of a rechargeable battery according to the third exemplary embodiment of the present invention.

The rechargeable battery according to the present exemplary embodiment has the same structure as the rechargeable battery according to the first exemplary embodiment except for the first safety member 72 such that the overlapping description is omitted.

Referring to FIG. 7, the first safety member 72 may be disposed between the electrode assemblies 10 such that it is installed for both surfaces thereof to contact the neighboring electrode assemblies. The first safety member 72 may include a side plate 721 attached to the flat surface 10a widely formed in the electrode assembly 10, and at least one of the first connection portion 723 and the second connection portion 724 connected and formed at the side plate to be attached to the negative uncoated regions 12a.

The side plate 721, and the first connection portion 723 and the second connection portion 724, may be made of a metal plate having conductivity such as copper or stainless steel. The side plate 721, the first connection portion 723, and the second connection portion 724 according to the present exemplary embodiment may be integrally formed. However, the present invention is not limited thereto, and the second connection portion 724 may be attached to the side plate 721 or the first connection portion 723 by welding.

The first connection portion 723 may be formed at one side end of the side plate 711, and the first connection portion 723 is connected in the height direction of the side plate 711. The second connection portion 724 is bent from the first connection portion 723, and a connection plate 725 connecting the first connection portion 723 and the second connection portion 724 is formed between the first connection portion 723 and the second connection portion 724.

The first connection portion 723, and the connection plate 725 and the second connection portion 724, are sequentially bent with a zigzag shape. The side plate 721 may have the thickness between 60 to 100µm, preferably between 70 to 90µm, even more preferably approximately 80µm such that the first connection portion 723 and the second connection portion 724 are easily bent.

Accordingly, the first connection portion 723 and the second connection portion 724 are protruded in different directions with respect to the thickness direction of side plate 721 via the connection plate 725 interposed therebetween.

The first connection portion 723 is welded to the negative uncoated region 12a of the electrode assembly 10 positioned at one side, and the second connection portion 724 is welded to the negative uncoated region 12a of the electrode assembly 10 positioned at the other side. Accordingly, the side plate 721 is electrically connected to the negative electrode 12 of two electrode assemblies 10 disposed at both sides.

However, the present invention is not limited thereto, one of the first connection portion 723 and the second connection portion 724 may be welded to the negative uncoated portion 12a and electrically connected to the negative electrode 12 of the electrode assembly.

In the side plate 721, the insulating film 76 is attached and installed to both surfaces contacting the electrode assembly 10. The insulation film 76 is made of a polymer and serves to prevent the positive electrode of the electrode assembly 10 and the first safety member 72 from being electrically connected with each other.

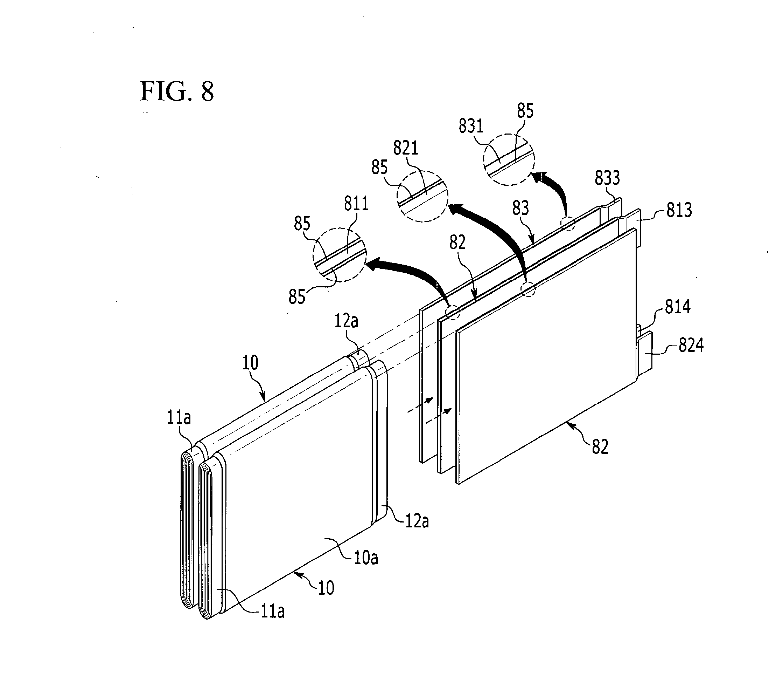

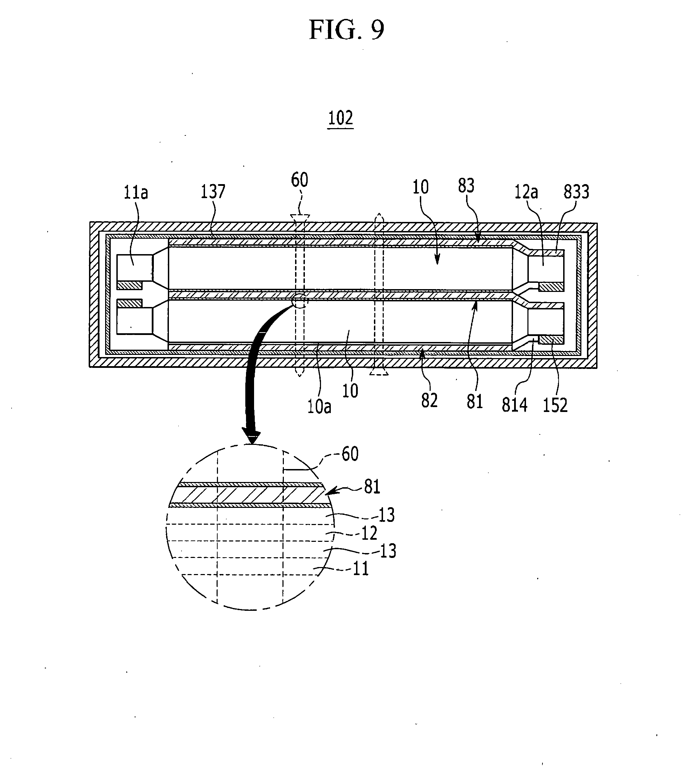

FIG. 8 is a perspective view of a safety member of a rechargeable battery according to the fourth exemplary embodiment of the present invention, and FIG. 9 is a cross-sectional view of a rechargeable battery according to the fourth exemplary embodiment of the present invention.

The rechargeable battery 102 according to the present exemplary embodiment has the same structure as the rechargeable battery according to the first exemplary embodiment except for the number of electrode assemblies 10 inserted inside the case 134 and the number of safety members such that the overlapping description is omitted.

Referring to FIG. 8 and FIG. 9, the rechargeable battery 102 according to the present exemplary embodiment includes a case 134, a plurality of electrode assemblies 10 inserted inside the case 134, and a safety member disposed between the electrode assemblies 10 and the outside of the electrode assemblies 10.

The positive uncoated region 11 a is formed at one side end of the electrode assembly 10, and the negative uncoated region 12a is formed at the other side end. The current collecting member 151 electrically connecting the positive electrode and the positive terminal is installed in the positive uncoated region 11 a, and the current collecting member 152 electrically connecting the negative electrode and the negative terminal is installed in the negative uncoated region. The insulating encapsulation 137 is installed between the case 134 and the electrode assemblies 10. The insulating encapsulation 137 is made of a film shape, and the upper portion thereof is opened.

The safety member includes the first safety member 81 disposed between the electrode assemblies 10 deposited, the second safety member 82 disposed at one side end of the electrode assemblies 10, and the third safety member 83 disposed at the other end of the electrode assemblies 10.

However, the present invention is not limited thereto, the safety member may not disclose the second safety member 82 and the third safety member 83.

The first safety member 81 may be disposed between the electrode assemblies 10 such that it is installed for both surfaces thereof to contact the neighboring electrode assemblies 10. The first safety member 81 may include a side plate 811 attached to the flat surface 10a widely formed in the electrode assembly 10, and at least one of the first connection portion 813 and the second connection portion 814 connected and formed at the side plate 811to be attached to the negative uncoated region 12a.

The side plate 811, and the first connection portion 813 and the second connection portion 814, may be made of a metal plate having conductivity such as copper or stainless steel. The side plate 811, the first connection portion 813, and the second connection portion 814 according to the present exemplary embodiment may be integrally formed. The first connection portion 813 may be formed on one side end of the side plate 811 and the second connection portion 814 may be formed under one side end of the side plate 811.

The first connection portion 813 may be bent toward the negative uncoated region 12a of one electrode assembly 10 among the neighboring electrode assemblies 10, and the second connection portion 814 may be bent toward the uncoated region of the other electrode assembly 10 among the neighboring electrode assemblies 10. Accordingly, the first connection portion 813 and the second connection portion 814 separately disposed in the height direction of the side plate 811 may be protruded in different directions with respect to a thickness direction of the side plate 411.

The first connection portion 813 has an inclination portion obliquely bent toward one negative uncoated region 12a from the side plate 811 and a welding portion bent from the inclination portion and parallel to the side plate. The second connection portion 814 has the inclination portion obliquely bent toward the other negative uncoated region 12a from the side plate 411 and the welding portion bent from the inclination portion and parallel to the side plate.

The first connection portion 813 and the second connection portion 814 are wound to the neighboring negative uncoated regions 12a to be electrically connected to the negative uncoated region 12a. Accordingly, the first safety member 81 is electrically connected to the negative electrodes 12 of two electrode assemblies 10 disposed at both sides.

However, the present invention is not limited thereto, one of the first connection portion 813 and the second connection portion 814 may be welded to the negative uncoated portion 12a and electrically connected to the negative electrode 12 of the electrode assembly.

In the side plate 811, the insulating film 85 is attached and installed to both surfaces contacting the electrode assembly 10. The insulation film 85 is made of a polymer and serves to prevent the positive electrode of the electrode assembly 10 and the first safety member 81 from being electrically connected with each other.

The second safety member 82 may be installed to contact the outer surface of the electrode assemblies 10 disposed at one side end among the electrode assemblies 10. The second safety member 82 may include a side plate 821 attached to the flat surface 10a toward the outside of the electrode assembly 10, and a connection portion 824 formed and connected to the side plate 821 and attached to the negative uncoated region 12a.

In this disclosure, the flat surface 10a means a plane surface except for a bent portion of an upper end and a lower end among the outer surface of the electrode assembly 10.

The side plate 821 and the connection portion 824 may be made of the metal plate having conductivity such as copper or stainless steel. The side plate 821 and the connection portion 824 according to the present exemplary embodiment may be integrally formed, and the connection portion 824 may be formed under one side end of the side plate 821.

The connection portion 824 may be bent and formed toward the negative uncoated region 12a of the neighboring electrode assemblies. The connection portion 824 may include the inclination portion obliquely bent from the side plate and the welding portion bent from the inclination portion and formed parallel to the side plate. The connection portion 824 may be welded to the negative uncoated region 12a to be electrically connected with the negative uncoated region 12a and supports the negative uncoated region 12a to prevent the negative uncoated region 12a from wobbling by external shock or vibration.

The insulating film 85 is attached to a surface contacted with the electrode assembly 10 in the side plate 821. The insulation film 85 is made of a polymer, and serves to prevent the positive electrode of the electrode assembly 10 and the second safety member 82 from being electrically connected with each other.

The third safety member 83 may be installed to contact the outer surface of the electrode assemblies 10 disposed at the other side end among the electrode assemblies 10. The third safety member 83 includes the side plate 831 attached to the flat surface 10a toward the outside of the electrode assembly 10 and the connection portion 833 formed and connected to the side plate 831 and attached to the negative uncoated region 12a.

In this disclosure, the flat surface 10a means a plane surface except for a bent portion of an upper end and a lower end among the outer surface of the electrode assembly 10.

The side plate 831 and the connection portion 833 are made of the metal plate having conductivity such as copper or stainless steel. The side plate 831 and the connection portion 833 according to the present exemplary embodiment are integrally formed, and the connection portion 833 is formed under one side end of the side plate 831.

The connection portion 833 is bent and formed toward the negative uncoated region 12a of the neighboring electrode assemblies. The connection portion 833 includes the inclination portion obliquely bent from the side plate and the welding portion bent from the inclination portion and formed parallel to the side plate. The connection portion is welded to the negative uncoated region 12a to be electrically connected to the negative uncoated region 12a. The connection portion 833 of the third safety member 83 is obliquely formed in the direction opposite to the connection portion 824 of the second safety member 82.

The insulating film 85 is attached to a surface contacting the electrode assembly 10 in the side plate 831. The insulation film 85 is made of a polymer and serves to prevent the positive electrode of the electrode assembly 10 and the third safety member 83 from being electrically connected with each other.

However, according to the present invention, the second safety member 82 and the third safety member 83 may not be installed contact the outer surface of the electrode assemblies 10 disposed at the other side end among the electrode assemblies 10.

As shown in FIG. 9, when a conductive foreign material 60 such as a nail penetrates from the outside of the rechargeable battery 102 due to shock or accidents, and as a result, the positive electrode and the negative electrode short-circuit each other through the conductive foreign material 60, excessive heat is generated in the rechargeable battery 100, which may explode or combust. However, as described in the exemplary embodiment, when the safety member is installed, the first side plate 81 or the second side plate 82 and the case 134 short circuit each other, it is possible to safely discharge thee charged current.

According to the present invention, after the positive and negative electrodes 11 and 12 and the separator 13 are spirally wound, the negative electrode 12 may be disposed on the outermost surface of the electrode assemblies 10.

Accordingly, according to the present invention, each of the first safety member 41 and the negative electrode 12 may be disposed on the both sides of the separator 13 to face each other.

That is, after penetrating the first safety member 41 and the negative electrode 12 in sequence, the conductive foreign material 60 may penetrate the positive electrode 11.

The conductive foreign material 60 may absorb the heat occurred between the conductive foreign material 60 and the negative electrode 12, and a inside temperature of the electrode assembly 10 may be suppressed.

Here, the first safety member 41 may be formed of copper.

As such, according to the exemplary embodiment, when foreign materials such as nail penetrates to cause a short-circuit, current may be discharged to remove a combustion risk, and and the heat may be absorbed by the safety members, thereby improving the safety of the rechargeable battery 102.

While this invention has been described in connection with what is presently considered to be practical exemplary embodiments, it is to be understood that the invention is not limited to the disclosed embodiments, but, on the contrary, is intended to cover various modifications and arrangements included within the scope of the appended claims.

## Claims

1. A rechargeable battery (101) comprising:
a plurality of electrode assemblies (10) stacked along a width direction (X), each having a first electrode (12), a second electrode (11) having a different polarity than the first electrode (12) and a separator (13) interposed between the first and the second electrodes (12, 11), and
a case (34) for mounting the plurality of electrode assemblies (10) therein and being connected to the second electrode (11);
a first safety member (41) provided between two neighboring electrode assemblies (10) of the plurality of electrode assemblies (10), the first safety member (41) being electrically connected to at least one of the two first electrodes (12) of the two neighboring electrode assemblies (10),
**characterized in that**
the first safety member (41) comprises:
a first connection portion (413) electrically connected to a first electrode (12) of one of the two neighboring electrode assemblies (10), and
a second connection portion (414) electrically connected to the first electrode (12) of the other of the two neighboring electrode assemblies (10).

2. Rechargeable battery (101) of claim 1, wherein the outermost electrode layer of an electrode assembly is formed by the first electrode (12).

3. Rechargeable battery (100) of claims 1 or 2, wherein the first safety member (41):
extends in a plane (YZ-plane) perpendicular to the width direction (X).

4. Rechargeable battery (101) of claim 1, wherein the first and second connecting portions (413, 414) extend from the same side surface of the first safety member (41) along a length direction (Y) perpendicular to the width direction (X).

5. Rechargeable battery (101) of any of claims 1 to 4, wherein the first and second connection portions (713, 714) are connected to each other in the height direction (Z) of the first safety member (71), preferably extend along the entire height of the first safety member (71).

6. Rechargeable battery (101) of one of any of claims 1 to 5, wherein the first and second connection portion (723, 724) are integrally formed with each other, connected by a connection plate (725), the first and second connection portions (723, 724) and the connection plate (725) being bent with respect to each other, preferably forming a zigzag- or meander-like or s-like structure.

7. Rechargeable battery (101) of any of claims 1 to 4, wherein the first and second connecting portions (413, 414) are separated along the height direction (Z) of the first safety member (41).

8. Rechargeable battery (101) of one of the previous claims 1 to 7, wherein the first connection portion (413, 713) is bent toward one first electrode (12) of the two neighboring electrode assemblies (10) and the second connection portion (414, 714) is bent toward the other first electrode (12) of the two neighboring electrode assemblies (10).

9. Rechargeable battery (101) of one of the previous claims, wherein the first safety member (41) further comprises a side plate (411) extending in a plane (YZ-plane) perpendicular to the width direction (X).

10. Rechargeable battery (101) of claim 9, wherein the first and second connection portions (413, 713; 414, 714) each comprise an inclination portion (413a, 414a) bent toward a respective first electrode (12) and a welding portion bent from the inclination portion and being parallel to the side plate (411), the welding portion being welded to the respective first electrode (12).

11. Rechargeable battery (101) of claim 9 or 10, wherein the side plate (411) is covered with an insulating film (45) formed on both surfaces of the side plate (411) facing the neighboring electrode assemblies (10).

12. Rechargeable battery (101) of one of the previous claims, wherein the first safety member (41) is a metal plate, preferably made of a same metal as the first electrodes (12).

13. Rechargeable battery (101) of one of the previous claims, wherein a second safety member (42) is installed between the case (34) and an outer surface of the plurality of electrode assemblies (10) facing an inner surface of the case (34), wherein preferably the second safety member (42) comprise a side plate (421) and a connection portion (424) being electrically connected to the first electrode (12) of the respective outer electrode assembly (10).

14. Rechargeable battery (101) of claim 13, wherein a third safety member (43) is installed between the case (34) and the opposite outer surface of the plurality of electrode assemblies (10) facing the opposite inner surface of the case (34), wherein preferably the third safety member (43) comprises a side plate (431) and a connection portion (434) being electrically connected to the first electrode (12) of the respective outer electrode assembly (10).

15. Rechargeable battery (101) of one of the previous claims, wherein the two neighboring first electrodes (12) each comprise a first uncoated region (12a) not coated with an active material and corresponding two neighboring second electrodes (11) each comprise a second uncoated region (11a) not coated with an active material, the first safety member (41) being electrically connected to two neighboring first electrode uncoated regions (12a).

## Patentansprüche

1. Wiederaufladbare Batterie (101), umfassend:
eine Mehrzahl von entlang einer Breitenrichtung (X) gestapelten Elektrodenbaugruppen (10), die jeweils eine erste Elektrode (12), eine zweite Elektrode (11) mit einer anderen Polarität als die erste Elektrode (12) und einen zwischen der ersten und der zweiten Elektrode (12, 11) angeordneten Separator (13) aufweisen, und
ein Gehäuse (34) zum Einbau der Mehrzahl von Elektrodenbaugruppen (10), das mit der zweiten Elektrode (11) verbunden ist;
ein erstes Sicherheitselement (41), das zwischen zwei benachbarten Elektrodenbaugruppen (10) der Mehrzahl von Elektrodenbaugruppen (10) vorgesehen ist, wobei das erste Sicherheitselement (41) elektrisch mit wenigstens einer der zwei ersten Elektroden (12) der zwei benachbarten Elektrodenbaugruppen (10) verbunden ist,
**dadurch gekennzeichnet, dass**
das erste Sicherheitselement (41) umfasst:
einen ersten Verbindungsabschnitt (413), der elektrisch mit einer ersten Elektrode (12) einer der zwei benachbarten Elektrodenbaugruppen (10) verbunden ist, und
einen zweiten Verbindungsabschnitt (414), der elektrisch mit der ersten Elektrode (12) der anderen der zwei benachbarten Elektrodenbaugruppen (10) verbunden ist.

2. Wiederaufladbare Batterie (101) nach Anspruch 1, wobei die äußerste Elektrodenschicht einer Elektrodenbaugruppe durch die erste Elektrode (12) ausgebildet wird.

3. Wiederaufladbare Batterie (100) nach Anspruch 1 oder 2, wobei das erste Sicherheitselement (41):
sich in einer zur Breitenrichtung (X) senkrechten Ebene (YZ-Ebene) erstreckt.

4. Wiederaufladbare Batterie (101) nach Anspruch 1, wobei sich der erste und zweite Verbindungsabschnitt (413, 414) von der gleichen Seitenfläche des ersten Sicherheitselements (41) aus entlang einer zur Breitenrichtung (X) senkrechten Längenrichtung (Y) erstrecken.

5. Wiederaufladbare Batterie (101) nach einem der Ansprüche 1 bis 4, wobei der erste und zweite Verbindungsabschnitt (713, 714) in der Höhenrichtung (Z) des ersten Sicherheitselements (71) miteinander verbunden sind und sich vorzugsweise entlang der gesamten Höhe des ersten Sicherheitselements (71) erstrecken.

6. Wiederaufladbare Batterie (101) nach einem der Ansprüche 1 bis 5, wobei der erste und zweite Verbindungsabschnitt (723, 724) einstückig ausgebildet und durch eine Verbindungsplatte (725) verbunden sind, wobei der erste und zweite Verbindungsabschnitt (723, 724) und die Verbindungsplatte (725) bezogen aufeinander gebogen sind und vorzugsweise eine Zickzack- oder mäanderartige oder S-artige Struktur ausbilden.

7. Wiederaufladbare Batterie (101) nach einem der Ansprüche 1 bis 4, wobei der erste und zweite Verbindungsabschnitt (413, 414) entlang der Höhenrichtung (Z) des ersten Sicherheitselements (41) getrennt sind.

8. Wiederaufladbare Batterie (101) nach einem der vorangehenden Ansprüche 1 bis 7, wobei der erste Verbindungsabschnitt (413, 713) in Richtung einer ersten Elektrode (12) der zwei benachbarten Elektrodenbaugruppen (10) gebogen ist und der zweite Verbindungsabschnitt (414, 714) in Richtung der anderen ersten Elektrode (12) der zwei benachbarten Elektrodenbaugruppen (10) gebogen ist.

9. Wiederaufladbare Batterie (101) nach einem der vorangehenden Ansprüche, wobei das erste Sicherheitselement (41) weiterhin eine Seitenplatte (411) umfasst, die sich in einer zur Breitenrichtung (X) senkrechten Ebene (YZ-Ebene) erstreckt.

10. Wiederaufladbare Batterie (101) nach Anspruch 9, wobei der erste und zweite Verbindungsabschnitt (413, 713; 414, 714) jeweils einen in Richtung einer jeweiligen ersten Elektrode (12) gebogenen Neigungsabschnitt (413a, 414a) und einen von dem Neigungsabschnitt weg gebogenen und zur Seitenplatte (411) parallelen Schweißabschnitt umfassen, wobei der Schweißabschnitt an der jeweiligen ersten Elektrode (12) angeschweißt ist.

11. Wiederaufladbare Batterie (101) nach Anspruch 9 oder 10, wobei die Seitenplatte (411) mit einer Isolierschicht (45) bedeckt ist, die auf beiden den benachbarten Elektrodenbaugruppen (10) zugewandten Oberflächen der Seitenplatte (411) ausgebildet ist.

12. Wiederaufladbare Batterie (101) nach einem der vorangehenden Ansprüche, wobei das erste Sicherheitselement (41) eine Metallplatte ist, die vorzugsweise aus dem gleichen Metall gefertigt ist wie die ersten Elektroden (12).

13. Wiederaufladbare Batterie (101) nach einem der vorangehenden Ansprüche, wobei zwischen dem Gehäuse (34) und einer einer Innenfläche des Gehäuses (34) zugewandten Außenfläche der Mehrzahl von Elektrodenbaugruppen (10) ein zweites Sicherheitselement (42) eingebaut ist, wobei das zweite Sicherheitselement (42) vorzugsweise eine Seitenplatte (421) und einen elektrisch mit der ersten Elektrode (12) der jeweiligen äußeren Elektrodenbaugruppe (10) verbundenen Verbindungsabschnitt (424) umfasst.

14. Wiederaufladbare Batterie (101) nach Anspruch 13, wobei zwischen dem Gehäuse (34) und der der gegenüberliegenden Innenfläche des Gehäuses (34) zugewandten gegenüberliegen Außenfläche der Mehrzahl von Elektrodenbaugruppen (10) ein drittes Sicherheitselement (43) eingebaut ist, wobei das dritte Sicherheitselement (43) vorzugsweise eine Seitenplatte (431) und einen elektrisch mit der ersten Elektrode (12) der jeweiligen äußeren Elektrodenbaugruppe (10) verbundenen Verbindungsabschnitt (434) umfasst.

15. Wiederaufladbare Batterie (101) nach einem der vorangehenden Ansprüche, wobei die zwei benachbarten ersten Elektroden (12) jeweils einen ersten unbeschichteten Bereich (12a) umfassen, der nicht mit einem aktiven Material beschichtet ist, und die zwei entsprechenden benachbarten zweiten Elektroden (11) jeweils einen zweiten unbeschichteten Bereich (11a) umfassen, der nicht mit einem aktiven Material beschichtet ist, wobei das erste Sicherheitselement (41) elektrisch mit den unbeschichteten Bereichen (12a) von zwei benachbarten ersten Elektroden verbunden ist.

## Revendications

1. Batterie rechargeable (101), comprenant :
une pluralité d'ensembles d'électrodes (10) empilés dans une direction de la largeur (X), comportant chacun une première électrode (12), une deuxième électrode (11) ayant une polarité différente de celle de la première électrode (12), et un séparateur (13) interposé entre les première et deuxième électrodes (12, 11), et
un boîtier (34) destiné à monter la pluralité d'ensembles d'électrodes (10) dans celui-ci et connecté à la deuxième électrode (11) ;
un premier élément de sécurité (41) disposé entre deux ensembles d'électrodes voisins (10) de la pluralité d'ensembles d'électrodes (10), le premier élément de sécurité (41) étant électriquement connecté à au moins l'une des deux premières électrodes (12) des deux ensembles d'électrodes voisins (10),
**caractérisée en ce que** :
le premier élément de sécurité (41) comprend :
une première partie de connexion (413) électriquement connectée à une première électrode (12) de l'un des deux ensembles d'électrodes voisins (10), et
une deuxième partie de connexion (414) électriquement connectée à la première électrode (12) de l'autre des deux ensembles d'électrodes voisins (10).

2. Batterie rechargeable (101) selon la revendication 1, dans laquelle la couche d'électrode la plus extérieure d'un ensemble d'électrodes est formée par la première électrode (12).

3. Batterie rechargeable (100) selon la revendication 1 ou 2, dans laquelle le premier élément de sécurité (41) s'étend dans un plan (plan YZ) perpendiculaire à la direction de la largeur (X).

4. Batterie rechargeable (101) selon la revendication 1, dans laquelle les première et deuxième parties de connexion (413, 414) s'étendent depuis la même surface latérale du premier élément de sécurité (41) dans une direction de la longueur (Y) perpendiculaire à la direction de la largeur (X).

5. Batterie rechargeable (101) selon l'une quelconque des revendications 1 à 4, dans laquelle les première et deuxième parties de connexion (713, 714) sont connectées l'une à l'autre dans la direction de la hauteur (Z) du premier élément de sécurité (71), en s'étendant de préférence sur la totalité de la hauteur du premier élément de sécurité (71).

6. Batterie rechargeable (101) selon l'une quelconque des revendications 1 à 5, dans laquelle les première et deuxième parties de connexion (723, 724) sont formées de façon solidaire l'une de l'autre en étant connectées par une plaque de connexion (725), les première et deuxième parties de connexion (723, 724) et la plaque de connexion (725) étant coudées l'une par rapport à l'autre, en formant de préférence une structure en lacets ou sinueuse ou en forme de s.

7. Batterie rechargeable (101) selon l'une quelconque des revendications 1 à 4, dans laquelle les première et deuxième parties de connexion (413, 414) sont séparées dans la direction de la hauteur (Z) du premier élément de sécurité.

8. Batterie rechargeable (101) selon d'une quelconque des revendications 1 à 7 précédentes, dans laquelle la première partie de connexion (413, 713) est coudée vers une première électrode (12) des deux ensembles d'électrodes voisins (10) et la deuxième partie de connexion (414, 714) est coudée vers l'autre première électrode (12) des deux ensembles d'électrodes voisins (10).

9. Batterie rechargeable (101) selon l'une des revendications précédentes, dans laquelle le premier élément de sécurité (41) comprend en outre une plaque latérale (411) s'étendant dans un plan (plan YZ) perpendiculaire à la direction de la largeur (X).

10. Batterie rechargeable (101) selon la revendication 9, dans laquelle les première et deuxième parties de connexion (413, 713 ; 414, 714) comprennent chacune une partie d'inclinaison (413a, 414a) coudée vers une première électrode (12) et une partie de soudage coudée depuis la partie d'inclinaison et qui est parallèle à la plaque latérale (411), la partie de soudage étant soudée à la première électrode respective (12).

11. Batterie rechargeable (101) selon la revendication 9 ou 10, dans laquelle la plaque latérale (411) est recouverte d'un film isolant (45) formé sur les deux surfaces de la plaque latérale (411) qui sont situées en face de l'ensemble d'électrodes voisin (10).

12. Batterie rechargeable (101) selon l'une des revendications précédentes, dans laquelle le premier élément de sécurité (41) est une plaque métallique, de préférence constituée du même métal que les premières électrodes (12).

13. Batterie rechargeable (101) selon l'une des revendications précédentes, dans laquelle un deuxième élément de sécurité (42) est installé entre le boîtier (34) et une surface extérieure de la pluralité d'ensembles d'électrodes (10) situés en face d'une surface intérieure du boîtier (34), le deuxième élément de sécurité (42) comprenant une plaque latérale (421) et une partie de connexion (424) qui est électriquement connectée à la première électrode (12) de l'ensemble d'électrodes extérieur respectif (10).

14. Batterie rechargeable (101) selon la revendication 13, dans laquelle un troisième élément de sécurité (43) est installé entre le boîtier (34) et la surface extérieure opposée de la pluralité d'ensembles d'électrodes (10) situés en face de la surface intérieure opposée du boîtier (34), dans laquelle il est préférable que le troisième élément de sécurité (43) comprenne une plaque latérale (431) et une partie de connexion (434) qui est électriquement connectée à la première électrode (12) de l'ensemble d'électrodes extérieur respectif (10).

15. Batterie rechargeable (101) selon l'une des revendications précédentes, dans laquelle les deux premières électrodes voisines (12) comprennent chacune une première région non revêtue (12a) qui n'est pas revêtue d'un matériau actif et les deux deuxièmes électrodes voisines correspondantes (11) comprennent chacune une deuxième région non revêtue (11a) qui n'est pas revêtue d'un matériau actif, le premier élément de sécurité (41) étant électriquement connecté à deux premières régions d'électrodes voisines (12a).
